(19) Europäisches Patentamt
European Patent Office
Office européen des brevets

(11) Publication number: **0 202 106**
**A2**

(12) # EUROPEAN PATENT APPLICATION

(21) Application number: 86303623.2

(22) Date of filing: 13.05.86

(51) Int. Cl.[4]: **A 23 L 2/38**

(30) Priority: 13.05.85 US 733088

(43) Date of publication of application: 20.11.86 Bulletin 86/47

(84) Designated Contracting States: AT BE CH DE FR GB IT LI LU NL SE

(71) Applicant: Clark, George H.
3112 Del Rey Avenue
Carlsbad California 92008(US)

(72) Inventor: Clark, George H.
3112 Del Rey Avenue
Carlsbad California 92008(US)

(74) Representative: Harrison, David Christopher et al,
MEWBURN ELLIS & CO 2/3 Cursitor Street
London EC4A 1BQ(GB)

(54) **A beverage and method of making a beverage for the replacement of body fluids and electrolytes.**

(57) Beverages are provided for replacement of body fluids and electrolytes depleted by e.g. strenuous exercise. They contain 1-15 meq. of a chelating agent selected from potassium aspartate, magnesium aspartate, potassium orotate, magnesium orotate and mixtures thereof per 250 ml of aqueous solution, with 3-12 g. of a fructose or aspartame sweetener. The chelating agents are easily absorbed, quickly transferred and physiologically compatible with both human and animal systems. Preferred additives (per 250 ml.) include 0.05-0.6 g. of citric acid as a tartness agent, 0.01-0.04 g. of benzoic acid to adjust pH to between 3.8 and 4.2, 0.2-0.45 ml of a fruit flavouring, and 0.2-0.6 g of potassium citrate as a smoothness agent.

The beverage compositions may also be provided as dry mixtures or aqueous concentrates, for dilution. In preparation of the beverage and concentrate the ingredients are added to aqueous solution and heated for 1-5 minutes at 180-230° F.

EP 0 202 106 A2

Croydon Printing Company Ltd.

A BEVERAGE AND METHOD OF MAKING A BEVERAGE FOR THE REPLACEMENT OF BODY FLUIDS AND ELECTROLYTES

This invention is related to a beverage for consumption. More specifically this invention provides a beverage for consumption by persons needing body fluids and essential electrolytes which have been depleted during periods of vigorous exercise.

Epting Jr. in U.S. Patent No. 4,448,770 teaches a beverage composition having potassium chloride, calcium gluconate, magnesium chloride and sucrose. Kahm in U.S. Patent No. 4,024,684 provides a dietetic beverage containing sugar, sodium chloride, potassium chloride and citric acid for supplementing sugars and essential salts in a mammalian body, depleted thereof during vigorous physical exercise.

Callaway in U.S. Patent No. 2,224,252 discloses an alkaline food product containing sodium, potassium, calcium and magnesium which product is admixed with various food or drinks. The product is said to correct the acid-base balance of athletes or of people suffering from acidosis.

Polli et al have proposed in U.S. Patent No. 3,337,404 an effervescent composition, based on potassium chloride, for potassium replacement therapy. The composition also contains citric acid and a soluble sweetener. The effervescense of the composition is said to mask the unpalatable taste normally associated with potassium-containing solutions.

Citrus fruit beverages or concentrates, fortified with various inorganic salts, have been proposed by Aktins et al (U.S. Patent No. 3,657,424), Sperti, et al (U.S. Patent No. 3,114, 641) and Houghtaling et al (U.S. Patent No. 3,227,562).

A product marketed as Gatorade R contains no fruit juice, but is artificially flavored with lemon-lime flavoring and contains glucose, sucrose, citric acid, salt, sodium citrate, sodium phosphate and potassium citrate. The product presently available contains 16 mq of sodium and 3 mq of potassium per ounce.

Hand et al in U.S. Patent No. 4,154,814 have disclosed a therapeutic chewing gum containing sodium and potassium chlorides, wherein the ratio of NaCl:KCl is at least 3:1.

None of the foreoing prior art teaches or suggests the particular beverage composition and method for preparing or making the same, of this invention.

The present invention accomplishes its desired objects by broadly providing a beverage composition and a beverage concentrate for consumption by a mammalian body to replace the body fluids and essential electrolytes which have been depleted. The beverage composition and concentrate comprises a chelate selected from the group consisting of potassium aspartate, magnesium aspartate, potassium orotate, magnesium orotate, and mixtures thereof, and a sweetener agent selected from the group consisting of fructose, aspartame, and mixtures thereof. The beverage composition and beverage concentrate each additionally preferably comprise a tartness agent; a smoothness agent, a flavoring agent, and a pH adjusting agent. The present invention also accomplishes its desired objects by broadly providing a method for preparing or making the beverage composition and the beverage concentrate by adding the ingredients to an aqueous solution and heating the solution. The heated solution is subsequently packaged and cooled.

Therefore, it is an object of the present invention to provide beverage compositions which are to be consumed by persons needing body fluids and essential electrolytes.

It is another objects of this invention to provide beverage concentrates which are to be admixed with water to provide the beverage compositions.

It is yet another object of this invention to provide a method for preparing the beverage compositions and the beverage concentrates.

These together with the various ancillary objects and features which will become apparent to those skilled int the art as the following description proceeds, are attained by the beverage compositions and beverage concentrations, and method for preparing or making the beverage compositions and concentrations of this invention.

This invention includes a beverage for consumption by mammalian bodies, preferably humans, to replace the body fluids and essential electrolytes which have been depleted, such as during exercise. The beverage comprises an aqueous solution containing per 250 ml.: 1-15 meq. of a chelate selected from the group consisting of potassium aspartate, magnesium aspartate, potassium orotate, magnesium orotate, and mixtures thereof; and 3-12 g. of a sweetener agent selected from the group consisting of fructose, aspartame, and mixtures thereof. In a preferred embodiment of the invention, the beverage preferably additionally includes per 250 ml. of aqueous solution, between about 0.05 g. to about 0.6 g. of a tartness agent and between about 0.01 g. and about 0.04 g. of a pH adjusting agent in order to adjust the pH of the beverage to between about 3.8 and about 4.2. The beverage compositions of this invention also preferably additionally include between about 0.2 g. and about 0.6 g. of a smoothness agent per 250 ml. of the aqueous solution, and between about 0.2 ml. and about 0.45 ml. of a flavoring agent per 250 ml. of the aqueous solution.

The beverage compositions of this invention may be consumed by persons engaged in vigorous activity, such as athletes. It may also be consumed by people doing strenous work, especially in hot environments; or by people who have suffered the loss of body fluids and electrolytes as a result of some illness of disease. The beverage composition of this invention may also supplement normal dietetic requirements for an energy source.

The replacement of body fluids and electrolytes lost by those individuals engaged in strenous activities is essential if smooth and efficient muscle function is to be maintained. Because of the constant loss of potassium by muscles in order to dilate the blood vessels to keep the muscles cool and the equal loss of magnesium through perspiration, those individuals undergoing work, exercise, or any activity requiring the strenous use of the muscles, need rapid replacement of the body fluids and electrolytes lost through perspiration and breathing. Should the body fluid and/or electrolyte loss be large and/or go uncompensated, then sever injury, or even death, can occur to certain individuals.

The beverage compositions of this invention provide an all natural composition for the rapid replacement of essential body fluids and/or electrolytes in those individuals needing such replacements. The beverage compositions do not contain high amounts of sodium, glucose, dextrose, sucrose or synthetic sweeteners, artificial coloring and flavoring, preservatives, or other non-essential elements which inhibit the absorption of fluids and/or may even cause nausea.

An important active constituent(s) in the beverage compositions of this invention are the chelating agent(s). I have discovered that the active chelates chosen should preferably be of natural origin, non-toxic, non-irritating to the buccal cavity, alimentary canal, gastric mucosa, or the intestinal tract. The chelates should preferably also be tightly bound, easily absorbed and transferred to the muscle cells, must not interfere with the absorption of water by the intestines, and must be present in low concentrations so as not to promote further dehydration due to osmosis. When absorbed, the chelates of this invention must assist in removal of heat away from active muscle(s), as well as promote good muscle tone and smooth muscle action.

In a preferred embodiment of this invention, the chelates of the beverage composition of this invention are the chelates of aspartate and orotate chelates of potassium and magnesium. I have discovered that these particular chelates are non-toxic, tightly bound, non-irritating to the buccal cavity, alimentary canal, gastric muscosa or intestinal tract. I have also discovered that these particular chelates do not impede the absorption of water from the intestinal tract because of the fact that their ionic charge is opposite to that of the gastric mucosa or intestinal wall. These particular chelates are easily absorbed and are quickly transferred to the tissues whereupon they enter the cells to replace potassium and magnesium which may have been depleted. These chelate substances are physiologically compatible with the systems of both humans and animals.

The chelates of aspartate and orotate chelates of potassium and magnesium for the purposes of this invention are preferably selected from the group consisting of potassium aspartate ($C_4H_6KNO_4$), magnesium aspartate ($C_8H_{12}MgN_2O_8$), potassium orotate ($C_5H_3N_2O_4 \cdot K \cdot 2.5H_2O$), magnesium orotate [$(C_5H_3N_2O_4)Mg \cdot 2.5H_2O$], and mixtures thereof; and are employed between about 1.0 meq. to about 15.0 meq. per 250 ml. of an aqueous solution. The aqueous solution may be any aqueous solution compatible for the purposes of this invention but is preferably demineralized, carbon filtered potable water. More preferably, the chelates are employed between about 1.0 meq. to about 7.5 meq. per 250 ml. of the aqueous solution; most preferably, between about 2.0 meq. to about 6.5 meq. per 250 ml.

The more preferred chelates from the group consisting of potassium aspartate, magnesium aspartate, potassium orotate, and magnesium orotate,

are potassium aspartate and magnesium aspartate. The potassium aspartate is preferably employed such as to be between about 3.0 meq. to about 15.0 meq per 250 ml. of the aqueous solution; more preferably between about 5.0 meq. to about 7.5 meq. per 250 ml.; and most preferably between about 6.0 meq. to about 6.5 meq. per 250 ml. Similarly, the magnesium aspartate is preferably employed such as to be between about 1.0 meq. to about 5.0 meq. per 250 ml. of the aqueous solution; more preferably between about 1.0 meq. to about 3.0 meq. per 250 ml.; and most preferably between about 2.0 meq. to about 2.15 meq. per 250 ml. It is generally preferred to employ the meq. of potassium aspartate and the meq. of magnesium aspartate in approximately a 3 to 1 ratio.

The beverage composition of this invention also comprises per 250 ml. of the aqueous solution, between about 3.0 g. and about 12.0 g. of a sweetener agent selected from fructose, aspartame, and mixtures thereof. More preferably, the sweetener agent is fructose and comprises per 250 ml. of the aqueous solution between about 3.0 g. to about 8.0 g. of the beverage; more preferably between about 3.0 g. to about 7.0 g. per 250 ml.; and most preferably between about 4.0 g. to about 6.0 g. per 250 ml.

Fructose is clearly the preferred sweetener agent for this invention because not only is it the sweetest of all sugars, but additionally, fructose does not cause a marked rise in blood sugar. This is important because high blood sugar levels also cause the production of insulin which will subsequently cause blood sugar levels to fall off rapidly to low or below normal levels. Such rapid decline in blood sugar levels results in immediate fatigue to the body. Fructose is prepared commercially in the crystalline form and even though it is presently one of the more expensive sugars, less fructose is to be used which makes it cost effective for the purposes of this invention.

A tartness agent is preferably incorporated into the beverage compositions of this invention in order to control tartness. The preferred tartness agent is citric acid and includes between about 0.05 g. to about 0.6 g. per 250 ml. of the aqueous solution; more preferably between about .075 g. to about 0.40 g. per 250 ml.; and most preferably between about 0.15 g. to about 0.25 g. per 250 ml.

. A pH adjusting agent is also preferably incorporated into the beverage compositions of this invention, with the preferred pH adjusting agent being benzoic acid ($C_7H_6O_2$). The pH adjusting agent, benzoic acid, preferably comprises between about 0.01 g. and about 0.04 g. per 250 ml. of the aqueous solution to preferably adjust the pH of the beverage between about 3.8 and about 4.2; more preferably between about 0.015 g. and about 0.035 g. per 250 ml. to more preferably adjust the pH between about 4.0 to about 4.2; and most preferably between about 0.02 g. to about 0.03 g. per 250 ml. to most preferably adjust the pH of the beverage to about 4.1.

A flavoring agent is recommended for the beverage compositions of this invention in order to mask any unpalatable taste that may originate from any of the beverage components of this invention. Preferred flavoring agents have been found to be the lemon flavor #109715 FD&O (Fritche, Dodge and Olcott) and/or the fruit punch flavor by FD&O. The flavoring agent(s) is employed such as to preferably comprise between about 0.2 ml. to about 0.45 ml. per 250 ml. of the aqueous solution; and more preferably between about 0.25 ml. to about 0.4 ml. per 250 ml. Most preferably the beverage composition of this invention comprises between about 0.3 ml. to about 0.35 ml. per 250 ml. of the aqueous solution of the flavoring agent(s).

Another recommended agent for the beverage composition of this invention is a smoothness agent for controlling the smoothness of the beverage. My preferred smoothness agent is potassium citrate which is included in the beverage composition of this invention such as to be preferably between about 0.20 g. to about 0.60 g. per 250 ml. of the aqueous solution. The more preferred amount of the potassium citrate is between about 0.20 g. to about 0.5 g. per 250 ml. of the aqueous solution; with the most preferred amount of potassium citrate being between about 0.275 g. to about 0.35 g. per 250 ml. of the aqueous solution.

In a preferred embodiment of this invention, the beverage compositions of this invention are dehydrated to be in a form of a dry mixture suitable for reconstituting with an aqueous solution into the beverage compositions. They dry beverage mixture of this invention preferably comprises 1-15 meq. of the chelate selected from the group consisting of potassium aspartate, magnesium aspartate, potassium orotate, magnesium orotate, and mixtures thereof, per 3-12 g. of the sweetener agent selected from the group consisting of fructose, aspartame, and mixtures thereof.

The dry mixture chelate per 3-12 g. of the sweetener agent is preferably about 3-15 meq. of potassium aspartate and about 1-5 meq. of magnesium aspartate; more preferably about 5-7.5 meq. of potassium aspartate and about 1-3 meq. of magnesium aspartate; and most preferably about 6-6.5 meq. of potassium aspartate and about 2-2.15 meq. of magnesium aspartate. The preferred sweetener agent is fructose in a preferred amount of about 3-12 g. and the foregoing preferred, more preferred, and most preferred meqs. of potassium aspartate and magnesium aspartate are preferably employed per about 3-12 g. of fructose, more preferably per about 3-8 g. of fructose, and most preferably per about 3-7 g. of fructose. The dry mixture compositons of this invention additionally per 3-12 g. of the sweetener agent preferably comprises about 0.05-0.6 g. of a tartness agent, about 0.2-0.6 g. of a smoothness agent, about 0.01-0.4 g. of a pH adjusting agent, and about 0.20-0.45 ml. of a flavoring agent. More preferably, the dry mixture per 3-12 g. of the sweetener agent comprises 0.075-0.4 g. of a tartness agent, about 0.2-.5 g. of a smoothness agent, about 0.015-0.035 g. of a pH adjusting agent, and about 0.25-.4 ml. of a flavoring agent. Most preferably, the dry mixture per 3-12 g. of the sweetener agent comprises about 0.15-.25 g. of a tartness agent, about 0.275-.35 g. of a smoothness agent, about 0.02-.03 g. of a pH adjusting agent, and about 0.3-.35 ml. of a flavoring agent. The preferred sweetener agent is fructose in a preferred amount of about 3-12 g. and the foregoing preferred, more preferred, and most preferred grams of a tartness agent, a smoothness agent, a pH adjusting agent and a flavoring agent are all preferably employed per about 3-12 g. of fructose, more preferably, per about 3-8 g. of fructose, and most preferably per about 3-7 g. of fructose. As was the case for the beverage compositions of this invention, the preferred tartness agent, smoothness agent, pH adjusting agent, and flavoring agent

for the dry beverage composition of this invention are respectively citric acid, potassium citrate, benzoic acid, and the lemon flavor #109715 FD&O and/or the fruit punch flavor by FD&O.

In another preferred embodiment of this invention the beverage compositions of this invention are in a concentrate form for admixing with an aqueous solution to provide the beverage compositions. The concentrate form of this invention comprises the same preferred, more preferred, and most preferred chelates, sweetener agent(s), tartness agent, smoothness agent, pH adjusting agent, and flavoring agent(s) as the beverage compositions of this invention, except each of these ingredients is employed in a greater amount per each 250 ml. of aqueous solution. Preferably, the concentrate of this invention comprises per 250 ml. of the aqueous solution at least about 16-300 meq. of the chelate(s), and at least about 9-240 g. of the sweetener. The concentrate additionally preferably comprises per 250 ml. of the aqueous solution at least about .62-12 g. of the tartness agent, at least about .62-12 g. of the smoothness agent, at least about 0.045-.8 g. of the pH adjusting agent, and at least about 0.47-9 ml. of the flavoring agent(s). In a preferred embodiment for the concentrate of this invention, the concentrate preferably comprises per each 250 ml. of the aqueous solution, at least about 60-300 meq. of potassium aspartate; at least about 20-100 meq. of magnesium aspartate; at least about 60-160 g. of fructose; at least about 1-12 g. of citric acid; at least about 4-12 g. of potassium citrate; at least about 4-9 ml. of one of the preferred flavoring agent(s); and at least about .2-.8 g. of benzoic acid.

The maximum concentration of each ingredient or the maximum or upper limits for the amount of each of the ingredients employed per each 250 ml. of the aqueous solution in the concentrate of this invention may be any reasonable maximum concentration or limit readily discernible to those artisans possessing ordinary skill in the art. Obviously, the higher the concentration of the ingredients in the concentrate of this invention, the more aqueous solution of water has to be added to provide the beverage composition of this invention and make the concentrate palatable to one's taste buds. The amount of water that has to be added to the concentrate to provide the beverage composition of this invention is easily attainable from the known concentration of each of the ingredients in the concentrate.

It is to be understood that while the stated particular tartness agent, smoothness agent, pH regulating agent, and flavoring agent(s) are the preferred for the purposes of this invention, it is not intended that any particular agent(s) that has been selected as the preferred, is to be construed to unduly limit the scope of my invention. Other particular tartness agent(s), smoothness agent(s), pH regulating agent(s), and flavoring agent(s) may be within the scope of my invention.

My invention will be illustated by the following set forth examples which are given by way of illustration and not by any limitations. All parameters such as concentrations, mixing proportions, temperatures, pressures, rates, compounds, etc. submitted in these examples are not to be construed to unduly limit the scope of my invention.

EXAMPLE I

An aqueous solution is obtained, preferably a potable water that has been demineralized and carbon filtered. For each 250 ml. of the aqueous solution, add to the aqueous solution between about 3 g. to about 12 g. of a sweetener agent selected from the group consisting of fructose, aspartame, and mixtures thereof. Also for each 250 ml. of the aqueous solution, add to the aqueous solution about 1-15 meq. of a chelate selected from the group consisting of potassium aspartate, magnesium aspartate, potassium orotate, magnesium orotate, and mixtures thereof. Stir the solution until all compounds are dissolved in the aqueous solution. Heat the stirred mixture at preferably about 180°-230° F for preferably about 1-5 min. More preferably the stirred mixture is heated at preferably about 190-212° F for preferably about 2-4 min.; and most preferably at about 200-210° F for about 2.5-3.5 min. After heating, the mixture is packaged, allowed to be cooled for a predetermined period of time (e.g. 24 hours), and subsequently consumed.

EXAMPLE II

Repeat Example I to prepare a concentrate using at least about 9-240 g. of the sweetener agent and at least about 16-300 meq. of the chelate. After the concentrate is packaged and cooled, a predetermined amount of the aqueous solution is added to the concentrate to provide a beverage.

EXAMPLE III

Repeat Example 1 but prior to adding to the aqueous solution the specified sweetener agent(s) and chelates, add the following agents for each 250 ml. of the aqueous solution: about 0.05-.6 g. of a tartness agent (i.e. citric acid); about 0.2-.6 g. of a smoothness agent (i.e. potassium citrate); about 0.2-.45 ml. of a flavoring agent(s) (i.e. lemon flavor No. 109715 FD&O or fruit punch flavor FD&O), and about .01-.04 g. of a pH adjusting agent (i.e. benzoic acid). Stir the mixture until all compounds are dissolved in the aqueous solution prior to adding the sweetener agent(s) and chelates. After adding the sweetener agent(s) and prior to adding the chelates, stir the mixture. After stirring, add the chelates, heat, package, and cool as previously specified.

Example IV

Repeat Example III to prepare a concentrate. Prior to adding the sweetener agent and the chelate in accordance with the specified amount of Example II, add the following agents for each 250 ml. of the aqueous solution: at least about .62-12 g. of a tartness agent (i.e. citric acid); at least about .62-12 g. of a smoothness agent (i.e. potassium citrate); at least about .47-9 ml. of a flavoring agent(s) (i.e. lemon flavor No. 109715 FD&O or fruit punch flavor FD&O); and at least about 0.045-.8 g. of a pH adjusting agent (i.e. benzoic acid). Stir the concentrate until all compounds are dissolved in the aqueous solution prior to adding the sweetener agent(s) and chelates. After adding the sweetener agent(s) and prior to adding the chelates, stir the concentrate. After stirring, add the chelates, heat, package, and cool as previously specified. A predetermined amount of the aqueous solution is added to the concentrate to provide a beverage.

Example V

For each 250 ml. of an aqueous solution add the following with stirring: about .2-.45 ml. of lemon flavor No. 109715 FD&O; about .2-.6 g. of potassium citrate; about .05-.6 g. of citric acid; and about 0.01-.04 benzoic acid. Next add 3-8 g. of crystalline fructose for each 250 ml. of the aqueous solution, with stirring until a complete solution is effected. For each 250 ml. of the aqueous solution, add 3-15 meq. of potassium aspartate and 1-5 meq. of magnesium aspartate with stirring. After a complete solution is formed, heat to about 180-230° F for about 1-5 min. Packaging is accomplished by adding the heated mixture to a batch tank by dumping into the top of the tank. Meter water into the batch tank by neptune (self-stopping) water meter. Pump product from batch tank through an in-line filter. Heat product in a frame heat exchanger by a tube and shell hot water exchanger from heat injection. Cool the product under sterile conditions, preferably with a De Laval model 650 Dearator. The beverage product is subsequently fed directly to filter and packaged in sterile container(s). The container(s) should preferably be placed under refrigeration (e.g. for 24 hours) before consuming.

Example VI

For each 250 ml. of an aqueous solution add the following with stirring: about .32 ml. of lemon flavor No. 109715 FD&O; about .30 g. of potassium citrate; about .2 g. of citric acid; and about .025 g. of benzoic acid. Subsequently, per each 250 ml. of the aqueous solution, add with stirring about 5-6 g. of crystalline fructose until a complete solution is obtained. For each 250 ml. of the aqueous solution, add 6.25 meq. of potassium aspartate and 2.07 meq. of magnesium aspartate with stirring. After solution is completely mixed, heat to about 205° F for about 3 minutes. Subsequently package in accordance with Example V.

The preceding examples can be repeated with similar success by substituting the generically or specifically described ingredients of this invention in accordance with their specified quantities for those ingredients and quantities used in the preceding examples.

While the present invention has been described herein with reference to particular embodiments thereof, and specific examples a latitude of modification, various changes and sibstitutions are intended in the foregoing disclosure, and in some instances some features of the invention will be employed without a corresponding use of other features without departing from the scope of the invention as set forth. Thus the invention includes the following:

CLAIMS:

1. A beverage for consumption by a mammalian body to replace in the mammalian body the body fluids and essential electrolytes which have been depleted, comprising an aqueous solution, including per 250 ml.:

(1) 1-15 meq. of a chelate selected from the group consisting of potassium aspartate, magnesium aspartate, potassium orotate, magnesium orotate, and mixtures thereof; and

(2) 3-12 g. of a sweetener agent selected from the group consisting of fructose, aspartame, and mixtures thereof.

2. A beverage according to claim 1 wherein said chelate per 250 ml. of the aqueous solution comprises about 3-15 meq. of potassium aspartate and about 1-5 meq. of magnesium aspartate.

3. A beverage according to claim 1 or claim 2 wherein said sweetener agent is between about 3 g. and about 8 g. and about 8 g. as fructose per 250 ml. of the aqueous solution.

4. A beverage according to any preceding claim, also including per 250 ml.:

0.05-6 g. of citric acid as a tartness agent;

.2-.6 g. of potassium citrate as a smoothness agent;

0.01-.04 g. of benzoic acid to adjust the pH; and .2-.45 ml. of a flavoring agent.

5. A dry mixture suitable for reconstituting with an aqueous solution into a beverage for consumption by a mammalian body to replace in the mammalian body body fluids and essential electrolytes which have been depleted, comprising 1-15 meq. of a chelate selected from the gorup consisting of potassium aspartate, magnesium aspartate, potassium orotate, magnesium orotate, and mixtures thereof, per 3-12 g. of a sweetener agent selected from the group consisting of fructose, aspartame, and mixtures thereof.

6. A concentrate for admixing with an aqueous solution to provide a beverage for consumption by a mammalian body to replace in the mammalian body the body fluids and essential electrolytes which have been depleted, comprising an aqueous solution, including per 250 ml:

(1) at least about 16-300 meq. of a chelate selected from the group consisting of potassium aspartate, magnesium aspartate, potassium orotate, magnesium orotate, and mixtures thereof; and

(2) at least about 9-240 g. of a sweetener agent selected from the group consisting of fructose, aspartame, and mixtures thereof.

7. A concentrate according to claim 6 wherein said chelate comprises at least about 62-300 meq. of potassium aspartate and at least about 22-100 meq. of magnesium aspartate.

8. A concentrate according to claim 6 or claim 7 wherein said sweetener agent is between at least about 9 g. and 160 g. of fructose per 250 ml. of the aqueous solution.

9. A method for preparing a beverage for consumption by a mammalian body to replace in the mammalian body the body fluids and essential electrolytes which have been depleted, comprising the steps of:

(a) adding per 250 ml. of an aqueous solution between about 3 g. to about 12 g. of a sweetener agent selected from the group consisting of fructose, aspartame, and mixtures thereof;

(b) adding to the solution of step (a) per 250 ml. of the aqueous solution about 1-15 meq. of a chelate selected from the group consisting of potassium aspartate, magnesium aspartate, potassium orotate, magnesium orotate, and mixtures thereof;

(c) stirring the solution of step (b) until all compounds are dissolved in the aqueous solution; and

(d) heating the stirred mixture of step (c) to between about 180° F. and about 230° F.

10. A method for preparing a concentrate for admixing with an aqueous solution to provide a beverage for consumption to a mammalian body to replace in the mammalian body the body fluids and essential electrolytes which have been depleted, comprising the steps of:

(a) adding per 250 ml. of an aqueous solution between about at least about 9 g. to at least about 240 g. of a sweetener agent selected from the group consisting of fructose, aspartame, and mixtures thereof;

(b) adding to the solution of step (a) per 250 ml. of the aqueous solution at least about 16-300 meq. of a chelate selected from the group consisting of potassium aspartate, magnesium aspartate, potassium orotate, magnesium orotate, and mixtures thereof;

(c) stirring the solution of step (b) until all compounds are dissolved in the aqueous solution; and

(d) heating the stirred mixture of step (c) to between about 180° F. and about 230° F.